# EUROPEAN PATENT SPECIFICATION

(11) **EP 4 472 276 B1**
(45) Date of publication and mention of the grant of the patent: **19.11.2025**
(21) Application number: 23176097.6
(22) Date of filing: 30.05.2023
(51) Int. Cl.: H04W 28/02, H04W 40/12, H04L 45/02, H04W 40/24, H04W 40/02

(54) **METHOD FOR OPERATING A USER EQUIPMENT WITH A TELECOMMUNICATIONS NETWORK AND/OR FOR USING DIFFERENT APPLICABILITY CRITERIA IN CONNECTION WITH USER EQUIPMENT ROUTE SELECTION POLICY RULES, USER EQUIPMENT, SYSTEM OR TELECOMMUNICATIONS NETWORK, PROGRAM AND COMPUTER PROGRAM PRODUCT**
VERFAHREN ZUM BETRIEB EINES TEILNEHMERGERÄTES MIT EINEM TELEKOMMUNIKATIONSNETZ UND/ODER COMPUTERPROGRAMM
PROCÉDÉ POUR OPÉRER UN ÉQUIPEMENT UTILISATEUR AVEC UN RÉSEAU DE TÉLÉCOMMUNICATION

(43) Date of publication of application: 04.12.2024
(73) Proprietor: Deutsche Telekom AG, 53113 Bonn (DE)
(72) Inventor: COLOM IKUNO, Josep, 2100 Korneuburg (AT)
(74) Representative: Schwöbel, Thilo K.

(56) References cited:
- EP-A1- 4 161 027
- US-A1- 2021 184 965

## Description

### BACKGROUND

The present application relates a method for operating a user equipment with a telecommunications network and/or for using different applicability criteria in connection with user equipment route selection policy rules, wherein the user equipment executes an application, wherein the application is causing traffic to be sent or to be received by the user equipment.

Furthermore, the present application relates to a user equipment for being operated with a telecommunications network and/or for using different applicability criteria in connection with user equipment route selection policy rules, wherein the user equipment executes an application, wherein the application is causing traffic to be sent or to be received by the user equipment.

Additionally, the present application relates to a system or to a telecommunications network for operating a user equipment with a telecommunications network and/or for using different applicability criteria in connection with user equipment route selection policy rules, wherein the user equipment executes an application, wherein the application is causing traffic to be sent or to be received by the user equipment.

Furthermore, the present application relates to a program and to a computer-readable medium for operating, according to the inventive method, a user equipment with a telecommunications network and/or for using different applicability criteria in connection with user equipment route selection policy rules.

In conventionally known telecommunications networks, it is typically possible to assign a traffic category to an application that is run or executed by a user equipment - typically the user equipment runs or executes an operating system (such as a mobile (devices) operating system, e.g. android, iOS, iPadOS, other High Level Operating Systems, HLOS, etc.) and the application is running on such an operating system; alternatively, the application might also be a lower level application that is not running on, or as part of, the operating system but, rather, as part of, e.g. another component or system of the user equipment. However, in conventionally known telecommunications networks, it is typically not possible to flexibly apply a classification of different applications. Other prior-art methods for using different applicability criteria in connection with user equipment route selection policy rules are disclosed in the patent publications US2021/184965A1 and EP4161027A1.

### SUMMARY

This invention is defined by the appended claims. An object of the present invention is to provide a technically simple, effective and cost effective solution for operating a user equipment with a telecommunications network and/or for using different applicability criteria in connection with user equipment route selection policy rules in a flexible manner, especially by means of the application, the traffic generated by the application or the user equipment being associated or assigned to applicability criteria information that is able to be structured in different hierarchical levels and/or in different groups and/or different sub-groups. A further object of the present invention is to provide a corresponding user equipment, a corresponding system or telecommunications network, and a corresponding program and computer-readable medium.

The object of the present invention is achieved by a method for using different applicability criteria in connection with user equipment route selection policy rules according to claim 1.

According to the present invention, it is advantageously possible to provide more flexibility to the use of traffic categories in user equipment route selection policy rules, allowing a granularity and visibility closer to that of individual application IDs, i.e., standardized as well as operator-specific traffic categories are possible to be used according to the present invention.

According to the present invention, a user equipment is operated with a telecommunications network especially for using different applicability criteria in connection with user equipment route selection policy rules. The user equipment executes an application, and the application is causing traffic to be sent or to be received by the user equipment. The application, the traffic generated by the application or the user equipment is associated or assigned to applicability criteria information, and the user equipment applies user equipment route selection policy rules to traffic associated with or caused by the application.

According to the present invention the applicability criteria information is structured or is able to be structured in different hierarchical levels and/or in different groups and/or different sub-groups such that matching and/or applying a specific user equipment route selection policy rule to traffic that is caused by a specific application involves the specific application or the respective traffic or the user equipment being associated or assigned to a specific piece of applicability criteria information, wherein the specific piece of applicability criteria information is referred to, by the specific user equipment route selection policy rule, either in a generalized manner and/or on a different hierarchical level and/or in a different group and/or in a different sub-group compared to the association or assignment to the specific application or to the traffic generated by the specific application or to the user equipment.

According to the present invention, it is advantageously possible and preferred that the specific application is associated or assigned to the first specific piece of applicability criteria information and the traffic - being caused by the specific application - is matched by the specific user equipment route selection policy rule, by means of the specific user equipment route selection policy rule comprising the second specific piece of applicability criteria information.

It is thereby advantageously possible to realize and implement the inventive method in a comparatively simple and efficient manner.

According to the present invention, it is furthermore advantageously possible and preferred that, in order to operate the user equipment with the telecommunications network, besides the specific user equipment route selection policy rule, a further specific user equipment route selection policy rule is able to be used for the matching and/or applying of traffic, wherein the matching and/or applying of either the specific user equipment route selection policy rule or of the further specific user equipment route selection policy rule to such traffic is based on the specific application or the respective traffic or the user equipment being associated or assigned to the specific piece of applicability criteria information, wherein the specific piece of applicability criteria information is referred to, by the specific user equipment route selection policy rule or by the further specific user equipment route selection policy rule, either
-- on the same hierarchical level and/or in the same group and/or sub-group compared to the association or assignment to the specific application or to the traffic generated by the specific application or to the user equipment and/or
-- in a generalized manner and/or
-- on a different hierarchical level and/or in a different group and/or in a different sub-group compared to the association or assignment to the specific application or to the traffic generated by the specific application or to the user equipment.

It is thereby advantageously possible to realize and implement the inventive method in a comparatively simple and efficient manner.

Furthermore, it is advantageously possible and preferred according to the present invention that, in order to operate the user equipment with the telecommunications network, besides the specific application, the user equipment executes a further specific application causing further traffic, wherein the matching and/or applying of either the specific user equipment route selection policy rule and/or of the further specific user equipment route selection policy rule to such traffic, or such further traffic, is based on the specific application or the further specific application, or the respective traffic or the respective further traffic or the user equipment being associated or assigned to the specific piece of applicability criteria information, wherein the specific piece of applicability criteria information is referred to, by the specific user equipment route selection policy rule or by the further specific user equipment route selection policy rule, either
-- on the same hierarchical level and/or in the same group and/or sub-group compared to the association or assignment to the specific application or to the specific further application or to the traffic generated by the specific application or to the further traffic generated by the further specific application or to the user equipment and/or
-- in a generalized manner and/or
-- on a different hierarchical level and/or in a different group and/or in a different sub-group compared to the association or assignment to the specific application or to the traffic generated by the specific application or to the further traffic generated by the further specific application or to the user equipment.

It is thereby advantageously possible to realize and implement the inventive method in a comparatively simple and efficient manner.

Furthermore, it is advantageously possible and preferred according to the present invention that the applicability criteria information - and likewise the piece or pieces of applicability criteria information - relates, especially as part of specific user equipment route selection policy rules, to at least one out of the following categories of information or kinds of information,:
-- traffic category information,
-- traffic descriptor information,
-- route selection validation criteria,
-- connection capabilities information,
-- application category information,
-- traffic-related information, especially destination-related information,
-- time validity information,
-- location validity information.

It is thereby advantageously possible to realize and implement the inventive method in a comparatively simple and efficient manner.

Furthermore, it is advantageously possible and preferred according to the present invention that the different and/or the specific applications correspond to at least one out of the following:
-- a part of an application, such as a specific library or service within an application;
-- a group of applications, such as several applications belonging to the same software provides;
-- an application containing other applications;
-- an application associated with multiple pieces of applicability criteria information, the application being able to alternatively using any of them, such as an application associated with multiple application identifiers used for different types of traffic generated by the application.

It is thereby advantageously possible to realize and implement the inventive method in a comparatively simple and efficient manner.

Furthermore, it is advantageously possible and preferred according to the present invention that the applicability criteria information - and likewise the piece or pieces of applicability criteria information - relates, especially as part of specific user equipment route selection policy rules, to at least one out of the following categories of information or kinds of information,:
-- traffic category information,
-- traffic descriptor information,
-- connection capabilities information,
-- application category information,
-- traffic-related information, especially destination-related information,
-- time validity information,
-- location validity information.

It is thereby advantageously possible to realize and implement the inventive method in a comparatively simple and efficient manner.

Furthermore, the present invention relates to a user equipment for using different applicability criteria in connection with user equipment route selection policy rules according to claim 8.

Furthermore, the present invention relates to a system or to a telecommunications network for using different applicability criteria in connection with user equipment route selection policy rules according to claim 9.

Additionally, the present invention relates to a program comprising a computer readable program code which, when executed on a computer and/or on a user equipment and/or on a network node of a telecommunications network, or in part on the user equipment and/or in part on the network node of a telecommunications network, causes the computer and/or the user equipment and/or the network node of a telecommunications network to perform the inventive method.

Additionally, the present invention relates to a computer-readable medium comprising instructions which when executed on a computer and/or on a user equipment and/or on a network node of a telecommunications network, or in part on the user equipment and/or in part on the network node of a telecommunications network, causes the computer and/or the user equipment and/or the network node of a telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising an access network, a core network and a user equipment, wherein the core network of the telecommunications network comprises a number of network functions or services.
Figure 2 schematically illustrates an example showing a user equipment with details regarding different applications of that user equipment, or being executed on that user equipment, and also with details regarding different user equipment route selection policy rules; furthermore, Figure 2 schematically illustrates a more detailed representation regarding different user equipment route selection policy rules and applicability criteria information as part thereof.
Figure 3 schematically illustrates an example of such applicability criteria information being structured in different hierarchical levels and/or in different groups and/or different sub-groups, and being associated to different applications.
Figure 4 schematically illustrates information related to the example shown in Figure 3.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

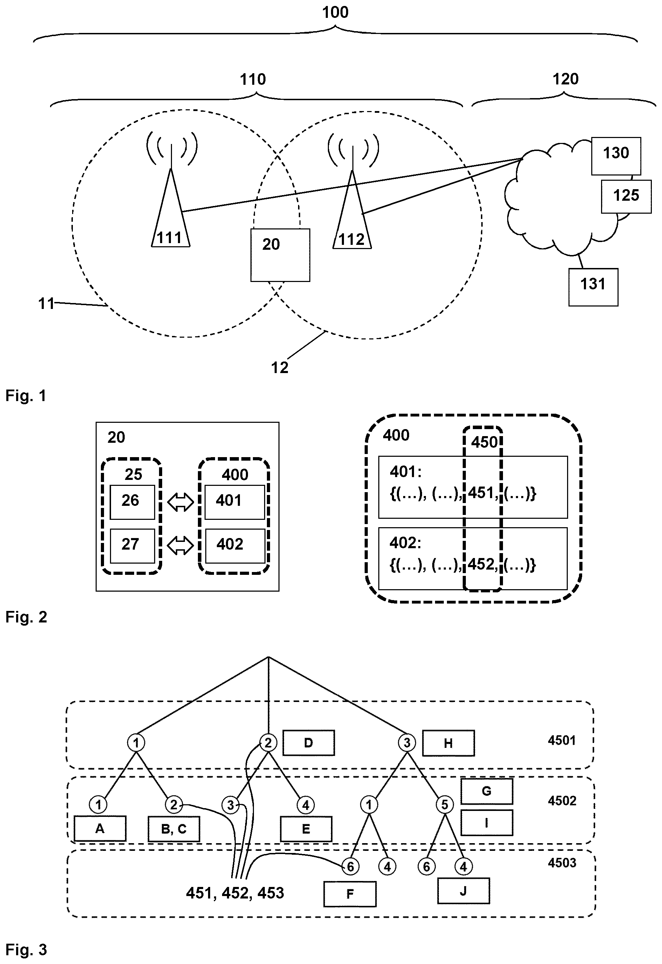

In Figure 1, a telecommunications network 100 comprising an access network 110, and a core network 120 is schematically shown. The telecommunications network 100, especially the core network 120, comprises a policy and charging function 130, wherein the policy and charging function 130 is configured to transmit user equipment route selection policy information to the user equipment 20. The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. A user equipment 20 comprises user equipment route selection policy information (shown in Figure 2).

The user equipment 20 is typically, but not necessarily, mobile i.e. able to move with respect to the (typically, but not necessarily static) radio cells 11, 12 or corresponding base station entities 111, 112 of the access network 110. In the exemplarily represented illustration of Figure 1, the core network 120 comprises or is connected to a data network 131. The core network 120 provides the user equipment 20 with data connectivity towards the data network 131.

Furthermore, a user equipment route selection policy repository 125 is at least accessible via the telecommunications network 100, and it is especially part of the telecommunications network 100 or of the core network 120 thereof.

In Figure 2, an example showing the user equipment 20 with details regarding different applications of that user equipment 20, or being executed on that user equipment, and also with details regarding different user equipment route selection policy rules is schematically shown on the left hand side of Figure 2.

According to the present invention, the user equipment 20 typically runs or executes a plurality of applications, typically on or as part of an operating system (such as, e.g., a mobile (devices) operating system, e.g. android, iOS, iPadOS, other High Level Operating System, HLOS, etc.) or, alternatively, as lower level applications that are not running on, or as part of, the operating system but, rather, as part of, e.g. another component or system of the user equipment.

In the context of the present invention, such applications are designated, collectively, by means of reference sign 25; specific or specifically considered (single) applications are referred to by means of reference signs 26 and 27, i.e. as 'individual' applications. This is schematically illustrated, in Figure 2 (left hand side), by means of a dashed line with (or having) reference sign 25 and enclosing reference signs 26 and 27.

Likewise, in the context of the present invention, user equipment route selection policy rules are designated, collectively, by means of reference sign 400; specific or specifically considered (single) user equipment route selection policy rules are referred to by means of reference signs 401 and 402, i.e. as 'individual' user equipment route selection policy rules. This is schematically illustrated, in Figure 2 (left hand side), by means of a dashed line with (or having) reference sign 400 and enclosing reference signs 401 and 402. Furthermore, Figure 2 schematically illustrates (on its right hand side) a more detailed representation regarding different user equipment route selection policy rules and applicability criteria information as part thereof; the right hand side is able to be understood as an enlarged and more detailed view of the dashed line with (or having) reference sign 400 and enclosing reference signs 401 and 402: As schematically shown, according to the present invention, the user equipment route selection policy rules 401, 402 comprise applicability criteria information 450, such as a traffic descriptor or a route selection validation criteria (i.e. validity criteria).

Again, in the context of the present invention, such applicability criteria information are designated, collectively, by means of reference sign 450; specific or specifically considered (single) (pieces) of applicability criteria information are referred to by means of reference signs 451 and 452 (or additional reference signs, such as 453, cf. Figure 3), i.e. as 'individual' pieces of applicability criteria information. This is schematically illustrated, in Figure 2 (right hand side), by means of a dashed line with (or having) reference sign 450 and enclosing reference signs 451 and 452.

Typically, the user equipment route selection policy information 400 is used by the telecommunications network 100 to oblige the user equipment 20 to use a set of rules to apply to, or steer, uplink traffic, i.e. how to route data packets thar are to be routed towards the core network 120 and/or towards a data network 131. Especially, such user equipment route selection policy information or rules 400 indicate or mandate the user equipment 20 to steer specific traffic to a given, or predetermined, PDU (protocol data unit) session. Especially, such user equipment route selection policy rules or information 400 is set or defined by the core network 120 of the telecommunications network 100, i.e. the telecommunications network 100 (or the core network 120 thereof) sets the user equipment route selection policy rule or information 400 by means of transmitting corresponding information to the user equipment 20, especially as part of the control data flow exchange between the telecommunications network 100 and the user equipment 20 over the air interface between the user equipment 20 and the corresponding access network element, typically a base station entity 111, 112 such as, e.g., a gNodeB entity. As a consequence of the user equipment 20 receiving the user equipment route selection policy rules 400, the user equipment 20 applies such rule information, i.e. traffic, especially application traffic (in uplink direction, towards the telecommunications network 100) that matches the corresponding user equipment route selection policy rule or information 400 is routed, by the user equipment 20, as mandated or prescribed by this user equipment route selection policy rule 400. Typically, as part of the user equipment route selection policy rules 400 different information elements are used, by the user equipment 20, as part of the user equipment policy part, wherein each user equipment route selection policy rule 400 typically contains the following information: length of user equipment route selection policy rule, precedence value of the user equipment route selection policy rule, length of traffic descriptor, traffic descriptor, length of route selection descriptor list, route selection descriptor list. Especially, the user equipment route selection policy information is defined in 3GPP TS 23.503 and is a set of one or more user equipment route selection policy rules 400, where a user equipment route selection policy rule 401, 402 is composed of:
-- a precedence value of the URSP rule , which determines the evaluation order of a URSP rule among all the existing URSP rules;
-- a traffic descriptor (TD) describing what traffic and/or application the rule applies to
-- one or more route selection descriptors (RSDs) each consisting of a precedence value of the route selection descriptor and containing traffic routing information,
-- validity criteria (e.g. time, location) when a user equipment route selection policy rule applies

Hence, what user equipment route selection policy rules 400 achieve is a ruleset, at the user equipment 20, so that specific traffic can be sent via a specific traffic description (e.g. access type), and the user equipment route selection policy rules function as a routing engine where, based on traffic descriptors, traffic can be differently routed, i.e. by means of the user equipment route selection policy rules, a traffic selection is implemented that matches user equipment route selection policy rules to specific traffic such that - based on such different user equipment route selection policy rules - different packet data unit sessions are able to be used or selected.

Especially, for every newly detected application 25, 26, 27, the user equipment 20 evaluates the user equipment route selection policy rules 400, 401, 402 in the order of rule precedence and determines if the application 25, 26, 27 is matching the traffic descriptor of any user equipment route selection policy rule 400, 401, 402. When a user equipment route selection policy rule 400, 401, 402 is determined to be applicable for a given application, the user equipment 20 shall select a route selection descriptor within this user equipment route selection policy rule in the order of the route selection descriptor precedence.

If the user equipment 20 determines that there is more than one existing PDU Session which matches (e.g. the selected route selection descriptor only specifies the network slice selection, while there are multiple existing PDU sessions matching the network slice selection with different DNNs), it is up to user equipment implementation to select one of them to use.

Regarding standardized traffic categories, these can be encoded in the connection capabilities information element in the traffic descriptor as currently standardized.

In conventionally known telecommunications networks, at least the "Enterprise", "Gaming" and "video Streaming" traffic categories are typically defined, and applications are able to be configured with an association to a given traffic category such that the user equipment performs a mapping between an application and a given traffic category. A traffic descriptor matching a specific traffic category then matches any application that is associated, in the user equipment 20, to that traffic category. However, applications are typically not obliged to be associated to a traffic category.

It is thus possible, in conventionally known telecommunications networks, to perform a coarse classification of application traffic without individually identifying application traffic (i.e. to individual applications), which may represent a privacy risk.

According to the present invention, it is advantageously possible to provide more flexibility to the use of traffic categories in user equipment route selection policy rules, allowing an enhanced granularity and visibility closer to that of individual application identifiers, i.e., standardized as well as operator-specific traffic categories are possible to be used according to the present invention, while still allowing backward-compatibility with currently-defined traffic categories not using this enhanced granularity.

As has already been mentioned, according to the present invention, the user equipment route selection policy rules 400 (or 401, 402) comprise applicability criteria information 450 (or 451, 452, 453).

Figure 3 schematically illustrates an example of such applicability criteria information 451, 452, 453 being structured in different hierarchical levels 4501, 4502, 4503 and/or in different groups 4501, 4502, 4503 and/or different sub-groups 4501, 4502, 4503, and being associated to different applications 25.

As has already been said, in conventionally known telecommunications networks, it is typically not possible to flexibly apply a classification of different applications - especially in view of different hierarchical levels 4501, 4502, 4503 and/or in different groups 4501, 4502, 4503 and/or different sub-groups 4501, 4502, 4503. According to the present invention, a higher level of flexibility is able to be applied to the use of applicability criteria information (e.g. regarding traffic categories in user equipment route selection policy rules), allowing a higher or better (i.e. more detailed) granularity regarding the association of network traffic, or features thereof, (especially its relation to individual applications 25, or groups thereof, its relation to other traffic features (such as destination identifiers or the like) or its relation to the user equipment 20) such that a more fine-grained visibility is possible, e.g. - regarding applications 25 - closer to that of individual application identifiers.

According to the present invention, this is possible to be achieved by means of
-- creating traffic sub-categories, hierarchically related to their parent category/categories;
-- associating, e.g., a traffic descriptor (of the user equipment route selection policy rules 450) containing, e.g., a given traffic category (as an example of a piece of applicability criteria information 451, 452, 453) to apply also to associated sub-categories;
-- associating a traffic descriptor (of the user equipment route selection policy rules 450) containing, e.g., a given traffic sub-category (as an example of a piece of applicability criteria information 451, 452, 453) to apply to all, e.g., applications associated to the sub-category;
-- providing a precedence-based configuration allowing for flexible definition of union/intersection of, e.g., traffic categories/sub-categories to which user equipment route selection policy rule(s) should be applied.

According to the present invention, this advantageously provides the possibility to apply a higher degree of granularity (i.e. more fine-grained) when applying user equipment route selection policy rules based on, e.g., traffic categories while avoiding the issues with using explicit identifiers (such as application identifiers), resulting in a more flexible application of slicing in the user equipment 20.

The proposed method according to the present invention allows for a more flexible use of traffic categories while still being backwards-compatible with the current approach (applied in conventionally known telecommunications networks) and also keeping user privacy by not using individual application identifiers.

In the following, an example of how traffic categories are able to be divided in further sub-categories (i.e. in view of different hierarchical levels 4501, 4502, 4503 and/or in different groups 4501, 4502, 4503 and/or different sub-groups 4501, 4502, 4503); in this context, it is even possible, according to the present invention, to define, if needed, further levels of categorization:
-- examples of traffic category: "enterprise"; "gaming"; "video-streaming";
-- examples of sub-categories: sub-category of (or within) "enterprise": "low-latency"; "delay-uncritical"; sub-category of (or within) "gaming": "cloud-based"; "edge-based"; sub-category of (or within) "video-streaming": "uplink-only"; "downlink-only"; "uplink-downlink";
-- examples of sub-sub-categories: sub-sub-category of (or within) the sub-category "cloud-based" of (or within) "gaming": "low-latency"; "delay-uncritical". Sub-(sub-)categories may be the same or may be different depending on the required use case as shown in this example.

According to the present invention, the user equipment 20 executes at least one application 25 (but preferably a plurality of applications 25) which causes traffic to be sent or to be received by the user equipment 20. This (application-generated) traffic is associated or assigned to applicability criteria information 450 (as part of user equipment route selection policy rules 400) such that the respective user equipment route selection policy rule 400 is able to be applied. According to the present invention, the applicability criteria information 450 is structured or, at least, able to be structured in different hierarchical levels 4501, 4502 and/or in different groups and/or different sub-groups 4501, 4502 in a manner such that matching and/or applying a specific user equipment route selection policy rule 401, 402 to traffic that is caused by a specific application 26, 27 (such matching being based on properties or requirements of the specific application 26, 27 and/or on properties of the respective traffic and/or on properties of the user equipment 20, e.g. its location) being associated or assigned to a specific piece of applicability criteria information 451, 452, 453. Furthermore according to the present invention, the specific piece of applicability criteria information 451, 452, 453 is referred to, by the specific user equipment route selection policy rule 401, 402, either in a generalized manner and/or on a different hierarchical level 4501, 4502 and/or in a different group and/or in a different sub-group 4501, 4502 compared to the association or assignment to the specific application 26, 27 or to the traffic generated by the specific application 26, 27 or to the user equipment 20.

Hence, the proposed method comprises the following main points:
-- hierarchical traffic categories: association of an application to a sub-category (one or more levels 4501, 4502 of sub-category) within a traffic category;
-- use of the traffic sub-category in the user equipment route selection policy rule's traffic descriptor for application matching;
-- backwards-compatibility;
-- combination with rule precedence to address complex sets containing several applications.

Figure 3 exemplarily shows such an example of an association between exemplarily ten different applications (schematically referred to, in Figure 3, by letters A, B, C, D, E, F, G, H, I, J) and traffic category levels 4501, 4502, 4503, namely a first traffic category level 4501, a second traffic category level 4502 or sub-category (level), and a third traffic category level 4503 or sub-sub-category (level).

As shown in Figure 3, it is still possible to associate an application to a given traffic category (i.e. on the highest, or first, level 4501), which ensures backward-compatibility; applications D and H are examples thereof in Figure 3, as these applications are assigned to (and at) the highest, or first, level 4501.

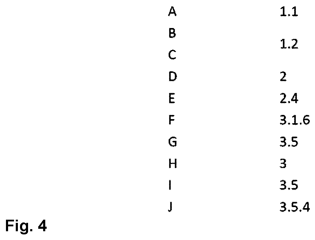

However, according to the present invention, by using traffic sub-categories, it is advantageously possible to flexibly associate a given user equipment route selection policy rule 401, 402 to a set of applications without explicitly addressing individual applications, hence reducing privacy implications; in the example shown in Figure 3, each application is associated to the respective (different) traffic categories, i.e. on the highest, or first, level 4501, (traffic) sub-categories, i.e. on the second level 4502 or (traffic) sub-sub-categories, i.e. on the third level 4503, as shown in the two columns of Figure 4: application A is assigned to traffic category 1.1; (both) applications B and C to 1.2; application D to traffic category 2; application E to 2.4; application F to 3.1.6; application G to 3.5; application H to traffic category 3; application I to 3.5; and application J to 3.5.4. According to the present invention, it is especially advantageously possible that the addressing of a given traffic category (on a higher level 4501, 4502, 4503) also matches for applications that are assigned to a given sub-category, i.e. lower level (this is also called inheritance). As examples (again regarding the example shown in Figure 3) for such a matching, the following user equipment route selection policy rule matches are possible:
-- in case that the traffic descriptor (in a specific, or considered, user equipment route selection policy rule 401, 402) refers to traffic category "2" (i.e. on the highest or first level 4501), applications D and E would be matched (as traffic sub-category "2.4" is (hierarchically) linked to traffic category "2", i.e. "2.4" is contained within "2"); this also allows for backwards compatibility;
-- in case that the traffic descriptor (in a specific, or considered, user equipment route selection policy rule 401, 402) refers to traffic category "2.4" (i.e. on the second level 4502), application (only) would be matched (as the inheritance is only applied 'downstream', i.e. from higher levels 4501, 4502, 4503 to lower levels);
-- in case that the traffic descriptor (in a specific, or considered, user equipment route selection policy rule 401, 402) refers to traffic category "2.3" (i.e. on the second level 4502), no application would be matched (again as the inheritance is only applied 'downstream', i.e. from higher levels 4501, 4502, 4503 to lower levels);
-- in case that the traffic descriptor (in a specific, or considered, user equipment route selection policy rule 401, 402) refers to traffic category "1" (i.e. on the highest or first level 4501), applications A, B and C would be matched (as all traffic sub-categories "1.X" as well as all traffic sub-sub-categories "1.X.Y" are (hierarchically) linked to traffic category "1", i.e. "1.1" and "1.2" are contained within "1"; again, this also allows for backwards compatibility;
-- in case that the traffic descriptor (in a specific, or considered, user equipment route selection policy rule 401, 402) refers to traffic category "1.2" (i.e. on the second level 4502), applications B and C would be matched (as these applications are assigned to "1.2".

Furthermore, according to the present invention, it is advantageously possible and preferred that the applicability criteria information 451, 452, 453 is referred to, by the specific user equipment route selection policy rule 401, 402, in a generalized manner: For the case where sub-category identifiers are applied in more than one place within the hierarchical tree, a more complex case is possible by allowing the addressing of specific sub-categories; e.g., the following matches are possible according to the present invention:
-- in case that the traffic descriptor (in a specific, or considered, user equipment route selection policy rule 401, 402) refers to traffic category "*.2" (i.e. on the second level 4502 but referring to any traffic category on the first level 4501), applications B and C would be matched (as the sub-category "2" - on the second level 4502) is only used in "1.2";
-- in case that the traffic descriptor (in a specific, or considered, user equipment route selection policy rule 401, 402) refers to traffic category "*.1" (i.e. likewise on the second level 4502 but referring to any traffic category on the first level 4501), applications A and F would be matched (as the sub-category "1" - on the second level 4502) is used in "1.1" and in "3.1.6".

A practical use case of such an example (i.e. the traffic descriptor, in a specific user equipment route selection policy rule 401, 402, referring to traffic category "*.1" or "*.2") would be, e.g. to address all applications within a specific category - e.g. a low-latency sub-category.

Furthermore, according to the present invention, it is advantageously possible and preferred that combinations with a user equipment route selection policy rule preference is possible:
By combining sub-categories with user equipment route selection policy rule precedence, it is possible to address more complex use cases where inheritance and explicit addressing of a sub-category can be combined. The following example assumes the following user equipment route selection policy rules:
-- in case that the traffic descriptor (in a specific first user equipment route selection policy rule X) refers to traffic category "3.5.4", application J would be matched;
-- in case that the traffic descriptor (in a specific second user equipment route selection policy rule Y) refers to traffic category "*.1", applications A and F would be matched;
-- in case that the traffic descriptor (in a specific third user equipment route selection policy rule Z) refers to traffic category "3", applications H, G and I would be matched;
-- in case that the precedence values (or priority values) of the user equipment route selection policy rules would correspond to "1" for the first user equipment route selection policy rule X, "2" for the second user equipment route selection policy rule Y, and "3" for the third user equipment route selection policy rule Z (implying that the first user equipment route selection policy rule X takes precedence with regard to the second user equipment route selection policy rule Y, which in turn takes precedence with regard to the third user equipment route selection policy rule Z) specific combinations or applicability criteria are able to be selected, namely application J in case that the first user equipment route selection policy rule X is applied (as the first priority), applications A and F in case that the second user equipment route selection policy rule Y is applied (as the second priority), and applications H, G and I in case that the third user equipment route selection policy rule Z is applied (as the third priority).

By means of just changing the precedence or priority (i.e. applying another precedence rank among the user equipment route selection policy rules X, Y, Z), a different outcome is able to be realized, thus illustrating the flexibility of the hierarchical approach according to the present invention: By considering a different user equipment route selection policy rule order (or priority or precedence, i.e. the core network 120 (or 5GC) might set exactly the same user equipment route selection policy rules in the user equipment 20, albeit assigning a different order of precedence), due to the combined application of the different addressing methods and the hierarchical approach, a different set of applications can be addressed, namely applications F, H, G, I and J in case that the third user equipment route selection policy rule Z is applied (as the first priority - in this case the third user equipment route selection policy rule Z applies to the whole subtree under node 3), no application in case that the first user equipment route selection policy rule X is applied (as the second priority - in this case, application J is not associated as it is already associated with the higher-priority third user equipment route selection policy rule Z), and application A in case that the second user equipment route selection policy rule Y is applied (as the third priority - in this case, application F not associated as already associated with a higher-priority third user equipment route selection policy rule Z).

Without change to the current precedence-based mechanism how application traffic is matched to user equipment route selection policy rules, but rather to the information describing the application and the granularity, a traffic descriptor can be described, it is possible to achieve the flexibility shown above while still maintaining backwards-compatibility with current user equipment route selection policy rules.

The association between application and traffic (sub-)categories implies that:
-- the association is known by the core network 120 and
-- the association is known by the user equipment 20.

Typically, the configuration of this association is left out of scope of 3GPP specifications; according to the present invention, it is proposed that either the operator or the core network 120 is able to remotely/dynamically set/update the application association by sending the respective association to the user equipment 20, either directly (e.g. via a control plane procedure such as user equipment configuration update (UCU) or user equipment parameter update (UPU) or via a configuration server (e.g. an API server managed by the operating system or user equipment vendor).

Due to the implementation in conventionally known telecommunications networks, since traffic categories are implemented via the connection capabilities information element, the method according to the present invention is equally applicable to traffic categories and connection capabilities, which one could generalize as "application (sub-)categories", hence, according to the present invention, a generalization to also cover connection capabilities information element is proposed.

Alternatively or cumulatively, the present invention also proposes an implementation within the user equipment route selection policy rules structure, i.e. the implementation of application sub-categories as an additional information element within a user equipment route selection policy rule. In order to allow for multiple sub-categories, the identifier can be partitioned such that it represents different levels such as, e.g.: bits 0-3: sub-category level 1; bits 4-7: sub-category level 2; etc.

Alternatively, parts of the connection capabilities information element is able to be used to this effect (this, however, would not be backwards-compatible).

For the case where a specific sub-category needs to be addressed, using the first proposed mechanism, this can be realized by not including the current connection capabilities information element in the user equipment route selection policy rule and instead including only the new sub-category information element; including both information elements would result in addressing a specific subcategory within a category. The example below illustrates these combinations based on the example shown in Figure 3: In case that the traffic descriptor relates, regarding the application category, to "1" (i.e. for example by means of bits 0-3), and, regarding the application sub-category, to "1" (i.e. for example by means of bits 4-7), the addressed application set corresponds to "1.1", whereas in case that the traffic descriptor relates, regarding the application category to "1" (i.e. for example by means of bits 0-3), and regarding the application sub-category to "None" (i.e. for example by means of bits 4-7), the addressed application set corresponds to "1.*", i.e. "1.1", "1.2", whereas in case that the traffic descriptor relates, regarding the application category to "None" (i.e. for example by means of bits 0-3), and regarding the application sub-category to "1" (i.e. for example by means of bits 4-7), the addressed application set corresponds to "*.1", i.e. "1.1", "3.1".

Similarly, by assigning reserved values (e.g. 0x00) to certain ranges within the information element (not only usable in the sub-category information element - this could also be used in the connection capabilities information element as a reserved value for use as "wildcard"), it is possible to use wildcards in the traffic descriptor for certain sub-category levels.

Similarly, the proposed method for traffic categories can also be applicable to other realizations of applicability criteria, e.g.:
-- data type, where a given data protocol and protocol sub-types can be used, e.g. IEEE 1588 as generic protocol type and IEEE 1588-2002 and IEEE 1588-2008 as specific (in this case incompatible) protocol sub-types;
-- location, where user equipment location can be described in different levels of granularity, such as continent/country/city/neighborhood

Hence, according to the present invention, it is advantageously possible and preferred that:
-- an association in network elements of the core network 120 (or the 5GS, especially within the policy and charging function of the core network 120, and the user equipment 20) is possible between an application and an application sub-category, the application category being linked to a parent application category (i.e. realizing a hierarchical structure);
-- a user equipment route selection policy rule including an application category is sent in order to associate the user equipment route selection policy rule with application traffic of applications associated to the given application category or associated to application sub-categories under the given application category (inheritance);
-- a user equipment route selection policy rule including an application sub-category under a specific application category is sent in order to associate the user equipment route selection policy rule with application traffic of applications associated to the given application sub-category under the given application category (addressing a specific sub-category);
-- a user equipment route selection policy rule including an application sub-category is sent and in order to associate the user equipment route selection policy rule with application traffic of applications associated to the given application sub-category in a generalized manner (wildcard-addressing);
-- furthermore, the present invention relates to setting/updating the association between an application and a an application sub-category in the user equipment 20 either by the core network 120 or the operator; especially, the setting/updating in the user equipment 20 is done either directly or indirectly via a third party;
-- the application category is either realized as an explicit identifier or as part of the connection capabilities information element;
-- especially, a sub-category information element is included in the user equipment route selection policy rule information element; alternatively, parts of the connection capabilities information element are used to include application sub-category information;
-- especially, reserved values for use as wildcard values are possible in the sub-category or category information element;
-- alternatively or cumulatively, a combination of application sub-categories and user equipment route selection policy rule precedence is possible to be used.

## Claims

1. Method for using different applicability criteria in connection with user equipment route selection policy rules,
wherein a user equipment (20) executes an application (25), wherein the application (25) is causing traffic to be sent or to be received by the user equipment (20),
wherein the application (25), the traffic generated by the application (25) or the user equipment (20) is associated or assigned to applicability criteria information (450), and wherein the user equipment (20) applies user equipment route selection policy rules (400) to traffic associated with or caused by the application (25),
wherein the applicability criteria information (450) is structured in different hierarchical levels (4501, 4502),
wherein, in order to operate the user equipment (20) with a telecommunications network (100), the method comprises the step of:
matching and/or applying a specific user equipment route selection policy rule (401, 402) to traffic that is caused by a specific application (26, 27), wherein such matching is based on the specific application (26, 27) being associated or assigned to a specific piece of applicability criteria information (451, 452, 453), wherein the specific piece of applicability criteria information (451, 452, 453) is referred to, by the specific user equipment route selection policy rule (401, 402), on a different hierarchical level (4501, 4502) compared to the association or assignment to the specific application (26, 27),
wherein a first specific piece of applicability criteria information (451, 452, 453) - being related to a first hierarchical level (4501, 4502) - is referred by means of a second specific piece of applicability criteria information (451, 452, 453), the second specific piece of applicability criteria information (451, 452, 453) being related to a second hierarchical level (4501, 4502) .

2. Method according to claim 1, wherein the specific application (26, 27) is associated or assigned to the first specific piece of applicability criteria information (451, 452, 453) and the traffic - being caused by the specific application (26, 27) - is matched by the specific user equipment route selection policy rule (401, 402) by means of the specific user equipment route selection policy rule (401, 402) comprising the second specific piece of applicability criteria information (451, 452, 453).

3. Method according to one of the preceding claims, wherein, in order to operate the user equipment (20) with the telecommunications network (100), besides the specific user equipment route selection policy rule (401, 402), a further specific user equipment route selection policy rule is used for the matching and/or applying of traffic, wherein the matching and/or applying of either the specific user equipment route selection policy rule (401, 402) or of the further specific user equipment route selection policy rule to such traffic is based on the specific application (26, 27) or the respective traffic or the user equipment (20) being associated or assigned to the specific piece of applicability criteria information (451, 452, 453), wherein the specific piece of applicability criteria information (451, 452, 453) is referred to, by the specific user equipment route selection policy rule (401, 402) or by the further specific user equipment route selection policy rule, either
-- on the same hierarchical level (4501, 4502) and/or in the same group or sub-group (4501, 4502) compared to the association or assignment to the specific application (26, 27) or to the traffic generated by the specific application (26, 27) or to the user equipment (20) and/or
-- on a different hierarchical level (4501, 4502) and/or in a different group or in a different sub-group (4501, 4502) compared to the association or assignment to the specific application (26, 27) or to the traffic generated by the specific application (26, 27) or to the user equipment (20).

4. Method according to one of the preceding claims, wherein, in order to operate the user equipment (20) with the telecommunications network (100), besides the specific application (26, 27), the user equipment (20) executes a further specific application causing further traffic, wherein the matching and/or applying of either the specific user equipment route selection policy rule (401, 402) and/or of the further specific user equipment route selection policy rule to such traffic, or such further traffic, is based on the specific application (26, 27) or the further specific application, or the respective traffic or the respective further traffic or the user equipment (20) being associated or assigned to the specific piece of applicability criteria information (451, 452, 453), wherein the specific piece of applicability criteria information (451, 452, 453) is referred to, by the specific user equipment route selection policy rule (401, 402) or by the further specific user equipment route selection policy rule, either
-- on the same hierarchical level (4501, 4502) and/or in the same group or sub-group (4501, 4502) compared to the association or assignment to the specific application (26, 27) or to the specific further application or to the traffic generated by the specific application (26, 27) or to the further traffic generated by the further specific application or to the user equipment (20) and/or
-- on a different hierarchical level (4501, 4502) and/or in a different group or in a different sub-group (4501, 4502) compared to the association or assignment to the specific application (26, 27) or to the traffic generated by the specific application (26, 27) or to the further traffic generated by the further specific application or to the user equipment (20).

5. Method according to one of the preceding claims, wherein the applicability criteria information (450) - and likewise the piece or pieces of applicability criteria information (451, 452, 453) - relates, especially as part of specific user equipment route selection policy rules (401, 402), to at least one out of the following categories of information or kinds of information,:
-- traffic category information,
-- traffic descriptor information,
-- route selection validation criteria,
-- connection capabilities information,
-- application category information,
-- traffic-related information, especially destination-related information,
-- time validity information,
-- location validity information.

6. Method according to one of the preceding claims, wherein the different and/or the specific applications (25, 26, 27) correspond to at least one out of the following:
-- a part of an application (25),
-- a group of applications,
-- an application containing other applications,
-- an application associated with multiple pieces of applicability criteria information (450), the application being able to alternatively using any of them.

7. Method according to one of the preceding claims, wherein the applicability criteria information (450) - and likewise the piece or pieces of applicability criteria information (451, 452, 453) - relates, especially as part of specific user equipment route selection policy rules (401, 402), to at least one out of the following categories of information or kinds of information,:
-- traffic category information,
-- traffic descriptor information,
-- connection capabilities information,
-- application category information,
-- traffic-related information, especially destination-related information,
-- time validity information,
-- location validity information.

8. User equipment (20) for using different applicability criteria in connection with user equipment route selection policy rules,
wherein the user equipment (20) executes an application (25), wherein the application (25) is causing traffic to be sent or to be received by the user equipment (20),
wherein the application (25), the traffic generated by the application (25) or the user equipment (20) is associated or assigned to applicability criteria information (450), and wherein the user equipment (20) applies user equipment route selection policy rules (400) to traffic associated with or caused by the application (25),
wherein the applicability criteria information (450) is structured in different hierarchical levels (4501, 4502),
wherein, in order to operate the user equipment (20) with the telecommunications network (100), the user equipment (20) is configured such that:
matching and/or applying a specific user equipment route selection policy rule (401, 402) to traffic that is caused by a specific application (26, 27), wherein such matching is based on the specific application (26, 27) being associated or assigned to a specific piece of applicability criteria information (451, 452, 453), wherein the specific piece of applicability criteria information (451, 452, 453) is referred to, by the specific user equipment route selection policy rule (401, 402), on a different hierarchical level (4501, 4502) compared to the association or assignment to the specific application (26, 27),
wherein a first specific piece of applicability criteria information (451, 452, 453) - being related to a first hierarchical level (4501, 4502) - is referred by means of a second specific piece of applicability criteria information (451, 452, 453), the second specific piece of applicability criteria information (451, 452, 453) being related to a second hierarchical level (4501, 4502).

9. Telecommunications network (100) for using different applicability criteria in connection with user equipment route selection policy rules,
wherein the user equipment (20) executes an application (25), wherein the application (25) is causing traffic to be sent or to be received by the user equipment (20),
wherein the application (25), the traffic generated by the application (25) or the user equipment (20) is associated or assigned to applicability criteria information (450), and wherein the user equipment (20) applies user equipment route selection policy rules (400) to traffic associated with or caused by the application (25),
wherein the applicability criteria information (450) is structured in different hierarchical levels (4501, 4502),
wherein, in order to operate the user equipment (20) with the telecommunications network (100), the system or telecommunications network (100) is configured such that:
matching and/or applying a specific user equipment route selection policy rule (401, 402) to traffic that is caused by a specific application (26, 27), wherein such matching is based on the specific application (26, 27) being associated or assigned to a specific piece of applicability criteria information (451, 452, 453), wherein the specific piece of applicability criteria information (451, 452, 453) is referred to, by the specific user equipment route selection policy rule (401, 402), on a different hierarchical level (4501, 4502) compared to the association or assignment to the specific application (26, 27),
wherein a first specific piece of applicability criteria information (451, 452, 453) - being related to a first hierarchical level (4501, 4502) - is able to be referred by means of a second specific piece of applicability criteria information (451, 452, 453), the second specific piece of applicability criteria information (451, 452, 453) being related to a second hierarchical level (4501, 4502).

10. Program comprising a computer readable program code which, when executed on a computer and/or on a user equipment (20) and/or on a network node of a telecommunications network (100), or in part on the user equipment (20) and/or in part on the network node of a telecommunications network (100), causes the computer and/or the user equipment (20) and/or the network node of a telecommunications network (100) to perform a method according one of claims 1 to 7.

11. Computer-readable medium comprising instructions which when executed on a computer and/or on a user equipment (20) and/or on a network node of a telecommunications network (100), or in part on the user equipment (20) and/or in part on the network node of a telecommunications network (100), causes the computer and/or the user equipment (20) and/or the network node of a telecommunications network (100) to perform a method according one of claims 1 to 7.

## Patentansprüche

1. Verfahren zur Verwendung unterschiedlicher Anwendbarkeitskriterien in Verbindung mit Routenauswahlrichtlinienregeln für Benutzergeräte,
wobei ein Benutzergerät (20) eine Anwendung (25) ausführt, wobei die Anwendung (25) verursacht, dass Datenverkehr von dem Benutzergerät (20) gesendet oder empfangen wird, wobei die Anwendung (25), der von der Anwendung (25) erzeugte Datenverkehr oder das Benutzergerät (20) mit Anwendbarkeitskriterieninformationen (450) verknüpft oder zugeordnet ist, und wobei das Benutzergerät (20) Routenauswahlrichtlinienregeln für Benutzergeräte (400) auf Datenverkehr anwendet, der mit der Anwendung (25) verknüpft ist oder von dieser verursacht wird, wobei die Anwendbarkeitskriterieninformationen (450) in unterschiedlichen hierarchischen Ebenen (4501, 4502) strukturiert sind,
wobei, um das Benutzergerät (20) mit einem Telekommunikationsnetz (100) zu betreiben, das Verfahren den Schritt umfasst:
Abgleichen und/oder Anwenden einer spezifischen Routenauswahlrichtlinienregel für Benutzergeräte (401, 402) auf Datenverkehr, der von einer spezifischen Anwendung (26, 27) verursacht wird, wobei ein solcher Abgleich darauf basiert, dass die spezifische Anwendung (26, 27) mit einem spezifischen Teil von Anwendbarkeitskriterieninformationen (451, 452, 453) verknüpft oder zugeordnet ist, wobei auf den spezifischen Teil von Anwendbarkeitskriterieninformationen (451, 452, 453) durch die spezifische Routenauswahlrichtlinienregel für Benutzergeräte (401, 402) auf einer anderen hierarchischen Ebene (4501, 4502) Bezug genommen wird, verglichen mit der Verknüpfung oder Zuordnung zu der spezifischen Anwendung (26, 27),
wobei auf einen ersten spezifischen Teil von Anwendbarkeitskriterieninformationen (451, 452, 453) **--** der sich auf eine erste hierarchische Ebene (4501, 4502) beziehtmittels eines zweiten spezifischen Teils von Anwendbarkeitskriterieninformationen (451, 452, 453) Bezug genommen wird, wobei sich der zweite spezifische Teil von Anwendbarkeitskriterieninformationen (451, 452, 453) auf eine zweite hierarchische Ebene (4501, 4502) bezieht.

2. Verfahren nach Anspruch 1, wobei die spezifische Anwendung (26, 27) mit dem ersten spezifischen Teil von Anwendbarkeitskriterieninformationen (451, 452, 453) verknüpft oder zugeordnet ist und der Datenverkehr **--** der von der spezifischen Anwendung (26, 27) verursacht wird **--** durch die spezifische Routenauswahlrichtlinienregel für Benutzergeräte (401, 402) mittels der spezifischen Routenauswahlrichtlinienregel für Benutzergeräte (401, 402) abgeglichen wird, die den zweiten spezifischen Teil von Anwendbarkeitskriterieninformationen (451, 452, 453) umfasst.

3. Verfahren nach einem der vorhergehenden Ansprüche, wobei, um das Benutzergerät (20) mit dem Telekommunikationsnetz (100) zu betreiben, neben der spezifischen Routenauswahlrichtlinienregel für Benutzergeräte (401, 402) eine weitere spezifische Routenauswahlrichtlinienregel für Benutzergeräte für das Abgleichen und/oder Anwenden von Datenverkehr verwendet wird, wobei das Abgleichen und/oder Anwenden entweder der spezifischen Routenauswahlrichtlinienregel für Benutzergeräte (401, 402) oder der weiteren spezifischen Routenauswahlrichtlinienregel für Benutzergeräte auf solchen Datenverkehr darauf basiert, dass die spezifische Anwendung (26, 27) oder der jeweilige Datenverkehr oder das Benutzergerät (20) mit dem spezifischen Teil von Anwendbarkeitskriterieninformationen (451, 452, 453) verknüpft oder zugeordnet ist, wobei auf den spezifischen Teil von Anwendbarkeitskriterieninformationen (451, 452, 453) durch die spezifische Routenauswahlrichtlinienregel für Benutzergeräte (401, 402) oder durch die weitere spezifische Routenauswahlrichtlinienregel für Benutzergeräte entweder
-- auf derselben hierarchischen Ebene (4501, 4502) und/oder in derselben Gruppe oder Untergruppe (4501, 4502) verglichen mit der Verknüpfung oder Zuordnung zu der spezifischen Anwendung (26, 27) oder zu dem Datenverkehr, der von der spezifischen Anwendung (26, 27) erzeugt wird, oder zu dem Benutzergerät (20) und/oder
-- auf einer anderen hierarchischen Ebene (4501, 4502) und/oder in einer anderen Gruppe oder in einer anderen Untergruppe (4501, 4502) verglichen mit der Verknüpfung oder Zuordnung zu der spezifischen Anwendung (26, 27) oder zu dem Datenverkehr, der von der spezifischen Anwendung (26, 27) erzeugt wird, oder zu dem Benutzergerät (20) Bezug genommen wird.

4. Verfahren nach einem der vorhergehenden Ansprüche, wobei, um das Benutzergerät (20) mit dem Telekommunikationsnetz (100) zu betreiben, neben der spezifischen Anwendung (26, 27) das Benutzergerät (20) eine weitere spezifische Anwendung ausführt, die weiteren Datenverkehr verursacht, wobei das Abgleichen und/oder Anwenden entweder der spezifischen Routenauswahlrichtlinienregel für Benutzergeräte (401, 402) und/oder der weiteren spezifischen Routenauswahlrichtlinienregel für Benutzergeräte auf solchen Datenverkehr oder solchen weiteren Datenverkehr darauf basiert, dass die spezifische Anwendung (26, 27) oder die weitere spezifische Anwendung oder der jeweilige Datenverkehr oder der jeweilige weitere Datenverkehr oder das Benutzergerät (20) mit dem spezifischen Teil von Anwendbarkeitskriterieninformationen (451, 452, 453) verknüpft oder zugeordnet ist, wobei auf den spezifischen Teil von Anwendbarkeitskriterieninformationen (451, 452, 453) durch die spezifische Routenauswahlrichtlinienregel für Benutzergeräte (401, 402) oder durch die weitere spezifische Routenauswahlrichtlinienregel für Benutzergeräte entweder
**--** auf derselben hierarchischen Ebene (4501, 4502) und/oder in derselben Gruppe oder Untergruppe (4501, 4502) verglichen mit der Verknüpfung oder Zuordnung zu der spezifischen Anwendung (26, 27) oder zu der spezifischen weiteren Anwendung oder zu dem Datenverkehr, der von der spezifischen Anwendung (26, 27) erzeugt wird, oder zu dem weiteren Datenverkehr, der von der weiteren spezifischen Anwendung erzeugt wird, oder zu dem Benutzergerät (20) und/oder
**--** auf einer anderen hierarchischen Ebene (4501, 4502) und/oder in einer anderen Gruppe oder in einer anderen Untergruppe (4501, 4502) verglichen mit der Verknüpfung oder Zuordnung zu der spezifischen Anwendung (26, 27) oder zu dem Datenverkehr, der von der spezifischen Anwendung (26, 27) erzeugt wird, oder zu dem weiteren Datenverkehr, der von der weiteren spezifischen Anwendung erzeugt wird, oder zu dem Benutzergerät (20) Bezug genommen wird.

5. Verfahren nach einem der vorhergehenden Ansprüche, wobei sich die Anwendbarkeitskriterieninformationen (450) **--** und ebenso der Teil oder die Teile von Anwendbarkeitskriterieninformationen (451, 452, 453) **--** insbesondere als Teil spezifischer Routenauswahlrichtlinienregeln für Benutzergeräte (401, 402) auf mindestens eine der folgenden Informationskategorien oder Informationsarten bezieht:
-- Verkehrskategorieinformationen,
-- Verkehrsdeskriptorinformationen,
-- Routenauswahlvalidierungskriterien,
-- Verbindungsfähigkeitsinformationen,
-- Anwendungskategorieinformationen,
-- verkehrsbezogene Informationen, insbesondere zielbezogene Informationen,
-- Zeitgültigkeitsinformationen,
-- Ortsgültigkeitsinformationen.

6. Verfahren nach einem der vorhergehenden Ansprüche, wobei die verschiedenen und/oder die spezifischen Anwendungen (25, 26, 27) mindestens einem der folgenden entsprechen:
-- einem Teil einer Anwendung (25),
-- einer Gruppe von Anwendungen,
-- einer Anwendung, die andere Anwendungen enthält,
-- einer Anwendung, die mit mehreren Teilen von Anwendbarkeitskriterieninformationen (450) verknüpft ist, wobei die Anwendung alternativ jeden davon verwenden kann.

7. Verfahren nach einem der vorhergehenden Ansprüche, wobei sich die Anwendbarkeitskriterieninformationen (450) **--** und ebenso der Teil oder die Teile von Anwendbarkeitskriterieninformationen (451, 452, 453) **--** insbesondere als Teil spezifischer Routenauswahlrichtlinienregeln für Benutzergeräte (401, 402) auf mindestens eine der folgenden Informationskategorien oder Informationsarten bezieht:
-- Verkehrskategorieinformationen,
-- Verkehrsdeskriptorinformationen,
-- Verbindungsfähigkeitsinformationen,
-- Anwendungskategorieinformationen,
-- verkehrsbezogene Informationen, insbesondere zielbezogene Informationen,
-- Zeitgültigkeitsinformationen,
-- Ortsgültigkeitsinformationen.

8. Benutzergerät (20) zur Verwendung unterschiedlicher Anwendbarkeitskriterien in Verbindung mit Routenauswahlrichtlinienregeln für Benutzergeräte,
wobei das Benutzergerät (20) eine Anwendung (25) ausführt,
wobei die Anwendung (25) verursacht, dass Datenverkehr von dem Benutzergerät (20) gesendet oder empfangen wird, wobei die Anwendung (25), der von der Anwendung (25) erzeugte Datenverkehr oder das Benutzergerät (20) mit Anwendbarkeitskriterieninformationen (450) verknüpft oder zugeordnet ist, und wobei das Benutzergerät (20) Routenauswahlrichtlinienregeln für Benutzergeräte (400) auf Datenverkehr anwendet, der mit der Anwendung (25) verknüpft ist oder von dieser verursacht wird, wobei die Anwendbarkeitskriterieninformationen (450) in unterschiedlichen hierarchischen Ebenen (4501, 4502) strukturiert sind, wobei, um das Benutzergerät (20) mit dem Telekommunikationsnetz (100) zu betreiben, das Benutzergerät (20) derart konfiguriert ist, dass:
Abgleichen und/oder Anwenden einer spezifischen Routenauswahlrichtlinienregel für Benutzergeräte (401, 402) auf Datenverkehr, der von einer spezifischen Anwendung (26, 27) verursacht wird, wobei ein solcher Abgleich darauf basiert, dass die spezifische Anwendung (26, 27) mit einem spezifischen Teil von Anwendbarkeitskriterieninformationen (451, 452, 453) verknüpft oder zugeordnet ist, wobei auf den spezifischen Teil von Anwendbarkeitskriterieninformationen (451, 452, 453) durch die spezifische Routenauswahlrichtlinienregel für Benutzergeräte (401, 402) auf einer anderen hierarchischen Ebene (4501, 4502) Bezug genommen wird, verglichen mit der Verknüpfung oder Zuordnung zu der spezifischen Anwendung (26, 27), wobei auf einen ersten spezifischen Teil von
Anwendbarkeitskriterieninformationen (451, 452, 453) **--** der sich auf eine erste hierarchische Ebene (4501, 4502) bezieht **--** mittels eines zweiten spezifischen Teils von Anwendbarkeitskriterieninformationen (451, 452, 453) Bezug genommen wird, wobei sich der zweite spezifische Teil von Anwendbarkeitskriterieninformationen (451, 452, 453) auf eine zweite hierarchische Ebene (4501, 4502) bezieht.

9. Telekommunikationsnetz (100) zur Verwendung unterschiedlicher Anwendbarkeitskriterien in Verbindung mit Routenauswahlrichtlinienregeln für Benutzergeräte, wobei das Benutzergerät (20) eine Anwendung (25) ausführt, wobei die Anwendung (25) verursacht, dass Datenverkehr von dem Benutzergerät (20) gesendet oder empfangen wird, wobei die Anwendung (25), der von der Anwendung (25) erzeugte Datenverkehr oder das Benutzergerät (20) mit Anwendbarkeitskriterieninformationen (450) verknüpft oder zugeordnet ist, und wobei das Benutzergerät (20) Routenauswahlrichtlinienregeln für Benutzergeräte (400) auf Datenverkehr anwendet, der mit der Anwendung (25) verknüpft ist oder von dieser verursacht wird, wobei die Anwendbarkeitskriterieninformationen (450) in unterschiedlichen hierarchischen Ebenen (4501, 4502) strukturiert sind, wobei, um das Benutzergerät (20) mit dem Telekommunikationsnetz (100) zu betreiben, das System oder Telekommunikationsnetz (100) derart konfiguriert ist, dass: Abgleichen und/oder Anwenden einer spezifischen Routenauswahlrichtlinienregel für Benutzergeräte (401, 402) auf Datenverkehr, der von einer spezifischen Anwendung (26, 27) verursacht wird, wobei ein solcher Abgleich darauf basiert, dass die spezifische Anwendung (26, 27) mit einem spezifischen Teil von Anwendbarkeitskriterieninformationen (451, 452, 453) verknüpft oder zugeordnet ist, wobei auf den spezifischen Teil von Anwendbarkeitskriterieninformationen (451, 452, 453) durch die spezifische Routenauswahlrichtlinienregel für Benutzergeräte (401, 402) auf einer anderen hierarchischen Ebene (4501, 4502) Bezug genommen wird, verglichen mit der Verknüpfung oder Zuordnung zu der spezifischen Anwendung (26, 27), wobei auf einen ersten spezifischen Teil von Anwendbarkeitskriterieninformationen (451, 452, 453) **--** der sich auf eine erste hierarchische Ebene (4501, 4502) bezieht **--** mittels eines zweiten spezifischen Teils von Anwendbarkeitskriterieninformationen (451, 452, 453) Bezug genommen werden kann, wobei sich der zweite spezifische Teil von Anwendbarkeitskriterieninformationen (451, 452, 453) auf eine zweite hierarchische Ebene (4501, 4502) bezieht.

10. Programm, das einen computerlesbaren Programmcode umfasst, der, wenn er auf einem Computer und/oder auf einem Benutzergerät (20) und/oder auf einem Netzknoten eines Telekommunikationsnetzes (100) oder teilweise auf dem Benutzergerät (20) und/oder teilweise auf dem Netzknoten eines Telekommunikationsnetzes (100) ausgeführt wird, den Computer und/oder das Benutzergerät (20) und/oder den Netzknoten eines Telekommunikationsnetzes (100) veranlasst, ein Verfahren nach einem der Ansprüche 1 bis 7 durchzuführen.

11. Computerlesbares Medium, das Anweisungen umfasst, die, wenn sie auf einem Computer und/oder auf einem Benutzergerät (20) und/oder auf einem Netzknoten eines Telekommunikationsnetzes (100) oder teilweise auf dem Benutzergerät (20) und/oder teilweise auf dem Netzknoten eines Telekommunikationsnetzes (100) ausgeführt werden, den Computer und/oder das Benutzergerät (20) und/oder den Netzknoten eines Telekommunikationsnetzes (100) veranlassen, ein Verfahren nach einem der Ansprüche 1 bis 7 durchzuführen.

## Revendications

1. Procédé d'utilisation de différents critères d'applicabilité en liaison avec les règles de politique de sélection de route d'équipement utilisateur,
dans lequel un équipement utilisateur (20) exécute une application (25), dans lequel l'application (25) provoque l'envoi ou la réception de trafic par l'équipement utilisateur (20), dans lequel l'application (25), le trafic généré par l'application (25) ou l'équipement utilisateur (20) est associé ou affecté à des informations de critères d'applicabilité (450), et dans lequel l'équipement utilisateur (20) applique des règles de politique de sélection de route d'équipement utilisateur (400) au trafic associé à ou causé par l'application (25), dans lequel les informations de critères d'applicabilité (450) sont structurées en différents niveaux hiérarchiques (4501, 4502),
dans lequel, afin de faire fonctionner l'équipement utilisateur (20) avec un réseau de télécommunications (100), le procédé comprend l'étape de :
mettre en correspondance et/ou appliquer une règle de politique de sélection de route d'équipement utilisateur spécifique (401, 402) au trafic causé par une application spécifique (26, 27), dans lequel une telle correspondance est basée sur l'application spécifique (26, 27) étant associée ou affectée à une partie spécifique d'informations de critères d'applicabilité (451, 452, 453), dans lequel la partie spécifique d'informations de critères d'applicabilité (451, 452, 453) est référencée, par la règle de politique de sélection de route d'équipement utilisateur spécifique (401, 402), sur un niveau hiérarchique différent (4501, 4502) par rapport à l'association ou l'affectation à l'application spécifique (26, 27),
dans lequel une première partie spécifique d'informations de critères d'applicabilité (451, 452, 453) **--** étant liée à un premier niveau hiérarchique (4501, 4502) **--** est référencée au moyen d'une seconde partie spécifique d'informations de critères d'applicabilité (451, 452, 453), la seconde partie spécifique d'informations de critères d'applicabilité (451, 452, 453) étant liée à un second niveau hiérarchique (4501, 4502).

2. Procédé selon la revendication 1, dans lequel l'application spécifique (26, 27) est associée ou affectée à la première partie spécifique d'informations de critères d'applicabilité (451, 452, 453) et le trafic **--** étant causé par l'application spécifique (26, 27) **--** est mis en correspondance par la règle de politique de sélection de route d'équipement utilisateur spécifique (401, 402) au moyen de la règle de politique de sélection de route d'équipement utilisateur spécifique (401, 402) comprenant la seconde partie spécifique d'informations de critères d'applicabilité (451, 452, 453).

3. Procédé selon l'une des revendications précédentes, dans lequel, afin de faire fonctionner l'équipement utilisateur (20) avec le réseau de télécommunications (100), outre la règle de politique de sélection de route d'équipement utilisateur spécifique (401, 402), une règle de politique de sélection de route d'équipement utilisateur spécifique supplémentaire est utilisée pour la correspondance et/ou l'application du trafic, dans lequel la correspondance et/ou l'application soit de la règle de politique de sélection de route d'équipement utilisateur spécifique (401, 402) soit de la règle de politique de sélection de route d'équipement utilisateur spécifique supplémentaire à un tel trafic est basée sur l'application spécifique (26, 27) ou le trafic respectif ou l'équipement utilisateur (20) étant associé ou affecté à la partie spécifique d'informations de critères d'applicabilité (451, 452, 453), dans lequel la partie spécifique d'informations de critères d'applicabilité (451, 452, 453) est référencée, par la règle de politique de sélection de route d'équipement utilisateur spécifique (401, 402) ou par la règle de politique de sélection de route d'équipement utilisateur spécifique supplémentaire, soit
**--** sur le même niveau hiérarchique (4501, 4502) et/ou dans le même groupe ou sous-groupe (4501, 4502) par rapport à l'association ou l'affectation à l'application spécifique (26, 27) ou au trafic généré par l'application spécifique (26, 27) ou à l'équipement utilisateur (20) et/ou
-- sur un niveau hiérarchique différent (4501, 4502) et/ou dans un groupe différent ou dans un sous-groupe différent (4501, 4502) par rapport à l'association ou l'affectation à l'application spécifique (26, 27) ou au trafic généré par l'application spécifique (26, 27) ou à l'équipement utilisateur (20).

4. Procédé selon l'une des revendications précédentes, dans lequel, afin de faire fonctionner l'équipement utilisateur (20) avec le réseau de télécommunications (100), outre l'application spécifique (26, 27), l'équipement utilisateur (20) exécute une application spécifique supplémentaire causant un trafic supplémentaire, dans lequel la correspondance et/ou l'application soit de la règle de politique de sélection de route d'équipement utilisateur spécifique (401, 402) et/ou de la règle de politique de sélection de route d'équipement utilisateur spécifique supplémentaire à un tel trafic, ou un tel trafic supplémentaire, est basée sur l'application spécifique (26, 27) ou l'application spécifique supplémentaire, ou le trafic respectif ou le trafic supplémentaire respectif ou l'équipement utilisateur (20) étant associé ou affecté à la partie spécifique d'informations de critères d'applicabilité (451, 452, 453), dans lequel la partie spécifique d'informations de critères d'applicabilité (451, 452, 453) est référencée, par la règle de politique de sélection de route d'équipement utilisateur spécifique (401, 402) ou par la règle de politique de sélection de route d'équipement utilisateur spécifique supplémentaire, soit
**--** sur le même niveau hiérarchique (4501, 4502) et/ou dans le même groupe ou sous-groupe (4501, 4502) par rapport à l'association ou l'affectation à l'application spécifique (26, 27) ou à l'application supplémentaire spécifique ou au trafic généré par l'application spécifique (26, 27) ou au trafic supplémentaire généré par l'application spécifique supplémentaire ou à l'équipement utilisateur (20) et/ou
**--** sur un niveau hiérarchique différent (4501, 4502) et/ou dans un groupe différent ou dans un sous-groupe différent (4501, 4502) par rapport à l'association ou l'affectation à l'application spécifique (26, 27) ou au trafic généré par l'application spécifique (26, 27) ou au trafic supplémentaire généré par l'application spécifique supplémentaire ou à l'équipement utilisateur (20).

5. Procédé selon l'une des revendications précédentes, dans lequel les informations de critères d'applicabilité (450) **--** et de même la partie ou les parties d'informations de critères d'applicabilité (451, 452, 453) **--** se rapportent, en particulier dans le cadre de règles de politique de sélection de route d'équipement utilisateur spécifiques (401, 402), à au moins une des catégories d'informations ou types d'informations suivants :
-- informations de catégorie de trafic,
-- informations de descripteur de trafic,
-- critères de validation de sélection de route,
-- informations de capacités de connexion,
-- informations de catégorie d'application,
-- informations liées au trafic, en particulier informations liées à la destination,
-- informations de validité temporelle,
-- informations de validité de localisation.

6. Procédé selon l'une des revendications précédentes, dans lequel les applications différentes et/ou spécifiques (25, 26, 27) correspondent à au moins l'un des éléments suivants :
-- une partie d'une application (25),
-- un groupe d'applications,
-- une application contenant d'autres applications,
-- une application associée à plusieurs parties d'informations de critères d'applicabilité (450), l'application étant capable d'utiliser alternativement n'importe laquelle d'entre elles.

7. Procédé selon l'une des revendications précédentes, dans lequel les informations de critères d'applicabilité (450) **--** et de même la partie ou les parties d'informations de critères d'applicabilité (451, 452, 453) **--** se rapportent, en particulier dans le cadre de règles de politique de sélection de route d'équipement utilisateur spécifiques (401, 402), à au moins une des catégories d'informations ou types d'informations suivants :
-- informations de catégorie de trafic,
-- informations de descripteur de trafic,
-- informations de capacités de connexion,
-- informations de catégorie d'application,
-- informations liées au trafic, en particulier informations liées à la destination,
-- informations de validité temporelle,
-- informations de validité de localisation.

8. Équipement utilisateur (20) pour l'utilisation de différents critères d'applicabilité en liaison avec les règles de politique de sélection de route d'équipement utilisateur, dans lequel l'équipement utilisateur (20) exécute une application (25), dans lequel l'application (25) provoque l'envoi ou la réception de trafic par l'équipement utilisateur (20), dans lequel l'application (25), le trafic généré par l'application (25) ou l'équipement utilisateur (20) est associé ou affecté à des informations de critères d'applicabilité (450), et dans lequel l'équipement utilisateur (20) applique des règles de politique de sélection de route d'équipement utilisateur (400) au trafic associé à ou causé par l'application (25), dans lequel les informations de critères d'applicabilité (450) sont structurées en différents niveaux hiérarchiques (4501, 4502),
dans lequel, afin de faire fonctionner l'équipement utilisateur (20) avec le réseau de télécommunications (100), l'équipement utilisateur (20) est configuré de telle sorte que :
mettre en correspondance et/ou appliquer une règle de politique de sélection de route d'équipement utilisateur spécifique (401, 402) au trafic causé par une application spécifique (26, 27), dans lequel une telle correspondance est basée sur l'application spécifique (26, 27) étant associée ou affectée à une partie spécifique d'informations de critères d'applicabilité (451, 452, 453), dans lequel la partie spécifique d'informations de critères d'applicabilité (451, 452, 453) est référencée, par la règle de politique de sélection de route d'équipement utilisateur spécifique (401, 402), sur un niveau hiérarchique différent (4501, 4502) par rapport à l'association ou l'affectation à l'application spécifique (26, 27),
dans lequel une première partie spécifique d'informations de critères d'applicabilité (451, 452, 453) **--** étant liée à un premier niveau hiérarchique (4501, 4502) **--** est référencée au moyen d'une seconde partie spécifique d'informations de critères d'applicabilité (451, 452, 453), la seconde partie spécifique d'informations de critères d'applicabilité (451, 452, 453) étant liée à un second niveau hiérarchique (4501, 4502).

9. Réseau de télécommunications (100) pour l'utilisation de différents critères d'applicabilité en liaison avec les règles de politique de sélection de route d'équipement utilisateur,
dans lequel l'équipement utilisateur (20) exécute une application (25), dans lequel l'application (25) provoque l'envoi ou la réception de trafic par l'équipement utilisateur (20), dans lequel l'application (25), le trafic généré par l'application (25) ou l'équipement utilisateur (20) est associé ou affecté à des informations de critères d'applicabilité (450), et dans lequel l'équipement utilisateur (20) applique des règles de politique de sélection de route d'équipement utilisateur (400) au trafic associé à ou causé par l'application (25), dans lequel les informations de critères d'applicabilité (450) sont structurées en différents niveaux hiérarchiques (4501, 4502),
dans lequel, afin de faire fonctionner l'équipement utilisateur (20) avec le réseau de télécommunications (100), le système ou réseau de télécommunications (100) est configuré de telle sorte que :
mettre en correspondance et/ou appliquer une règle de politique de sélection de route d'équipement utilisateur spécifique (401, 402) au trafic causé par une application spécifique (26, 27), dans lequel une telle correspondance est basée sur l'application spécifique (26, 27) étant associée ou affectée à une partie spécifique d'informations de critères d'applicabilité (451, 452, 453), dans lequel la partie spécifique d'informations de critères d'applicabilité (451, 452, 453) est référencée, par la règle de politique de sélection de route d'équipement utilisateur spécifique (401, 402), sur un niveau hiérarchique différent (4501, 4502) par rapport à l'association ou l'affectation à l'application spécifique (26, 27),
dans lequel une première partie spécifique d'informations de critères d'applicabilité (451, 452, 453) **--** étant liée à un premier niveau hiérarchique (4501, 4502) **--** peut être référencée au moyen d'une seconde partie spécifique d'informations de critères d'applicabilité (451, 452, 453), la seconde partie spécifique d'informations de critères d'applicabilité (451, 452, 453) étant liée à un second niveau hiérarchique (4501, 4502).

10. Programme comprenant un code de programme lisible par ordinateur qui, lorsqu'il est exécuté sur un ordinateur et/ou sur un équipement utilisateur (20) et/ou sur un nœud de réseau d'un réseau de télécommunications (100), ou en partie sur l'équipement utilisateur (20) et/ou en partie sur le nœud de réseau d'un réseau de télécommunications (100), amène l'ordinateur et/ou l'équipement utilisateur (20) et/ou le nœud de réseau d'un réseau de télécommunications (100) à effectuer un procédé selon l'une des revendications 1 à 7.

11. Support lisible par ordinateur comprenant des instructions qui, lorsqu'elles sont exécutées sur un ordinateur et/ou sur un équipement utilisateur (20) et/ou sur un nœud de réseau d'un réseau de télécommunications (100), ou en partie sur l'équipement utilisateur (20) et/ou en partie sur le nœud de réseau d'un réseau de télécommunications (100), amènent l'ordinateur et/ou l'équipement utilisateur (20) et/ou le nœud de réseau d'un réseau de télécommunications (100) à effectuer un procédé selon l'une des revendications 1 à 7.
